# EUROPEAN PATENT SPECIFICATION

(11) **EP 2 934 994 B1**
(45) Date of publication and mention of the grant of the patent: **21.09.2016**
(21) Application number: 12815700.5
(22) Date of filing: 21.12.2012
(51) Int. Cl.: B62K 5/05, B62M 6/60, B62M 9/02

(54) **HUMAN POWERED LAND VEHICLE**
DURCH MENSCHLICHE KRAFT ANGETRIEBENES LANDFAHRZEUG
VÉHICULE TERRESTRE PROPULSÉ PAR UN ÊTRE HUMAIN

(43) Date of publication of application: 28.10.2015
(73) Proprietor: Recticel N.V., 1140 Brussels (BE)
(72) Inventor: DE WINTER, Hugo, B-9230 Wetteren (BE); BRACKE, Kris, B-9230 Wetteren (BE); VERMEULEN, Michel, B-9031 Drongen (BE)
(74) Representative: Dennemeyer & Associates S.A.
(86) International application number: PCT/EP2012/076721
(87) International publication number: WO 2014/094886

(56) References cited:
- CN-A- 102 107 712
- CN-Y- 2 728 899
- DE-A1-102006 041 650
- US-A- 5 036 937
- US-A1- 2004 188 977
- US-B1- 7 108 097
- US-B1- 7 661 501

## Description

The invention is related to a human powered land vehicle with two steered front wheels and one rear wheel driven by a drive train, which drive train incorporates a human powered actuator to be actuated for propulsion of the vehicle by a person driving the vehicle and kinematically coupled to a driven wheel for propulsing the vehicle in at least one driving direction and which vehicle further disposes of a non-human powered actuator arranged to drive at least one of the wheels of the vehicle with the further features of the preamble claim 1.

Typical pedal propulsed land vehicles are bicycles (pedal propulsed land vehicles with two wheels) or tricycles (pedal propulsed land vehicles with three wheels). A part from the wheelchair type vehicles, tricycles are three-wheeled bicycles, in which the driver usually is positioned in a laying-down position, similar to a two-wheel recumbent bicycle. Such tricycles typically have two front wheels and a rear wheel driven by a pedal drive. The front wheels are steered. Such vehicles may comprise a cover, typically made of a flexible canvas or of a rigid panel. Both embodiments may also cover the front of the vehicle. Then a windshield is implemented into such cover.

It is also known from prior art to additionally make use of a motor as an auxiliary drive for propulsing such vehicles. Typically electric motors are used for these purposes. In DE 295 15 188 U1 a vehicle of this kind is disclosed. The drive train for propulsing the vehicle with muscular power comprises a pedal drive arranged with its axis in front of the axles of the two front wheels. The pedal drive has a chain as driving means, which in turn drives the rear wheel. The motor also drives the rear wheel. The motor drive is coupled to the axle of the rear wheel with a centrifugal clutch. According to this concept the muscular force and the driving force of the motor are actuating the rear wheel in a parallel manner. Typically the vehicle is either driven only by muscular force or by using the motor.

According to a different concept to drive such low weight vehicle using muscular power the muscular power is used to generate electric energy by driving a generator. The electric power generated is stored in a battery or most commonly in a set of batteries. The actual driving force is provided by an electric motor. Such concept is disclosed in DE 197 32 468 A1 and in DE 10 2008 064 071 A1. With this concept the muscular power is not used for propulsion directly, but to generate the necessary energy, which is then used to actuate the electric motor.

In particular for future urban mobility light weight muscular propulsed vehicles with an auxiliary motor are regarded as promising to provide the mobility needed and still save conventional fuels. Vehicles propulsed indirectly by muscular power actuating a generator need sufficient large batteries for storage of the electric power generated. Such batteries are not only expensive, but also heavy. Moreover, such systems suffer from multiple subsequent energy transformations (mechanical energy → electric energy → chemical energy (battery) → electric energy → mechanical energy), which heavily lowers the efficiency of the use of the pedal power of the driver.

Tricycles of the kind with an auxiliary motor are designed as vehicles, in which the driver is in a laying position. In such vehicles the axis of the pedal drive as human powered actuator is arranged in front of the front wheels. As a consequence, these vehicles have a certain length, which may not be reduced. For easier handling of such a vehicle while driving, in particular when sharp curves are to be taken or when a parking slot is needed, a shorter vehicle would be preferred.

The power train of vehicles, which may be driven by muscular propulsion and an auxiliary motor, are designed, so that the parallel actuating motion driving the rear wheel follows the concept, that, when driven by the auxiliary motor, its power consumption is designed to drive the vehicle sufficiently and that on top of this driving force the muscular driving force is used to enhance the speed. Moreover, it would be appreciated, if such vehicles could be designed to be more energy efficient.

A human powered land vehicle with two steered front wheels and one rear wheel with the features of the preamble of claim 1 is disclosed in US 7,661,501 B1. The document US7661501 represents the closest prior art. Although in terms of energy efficiency this prior art vehicle is more energy efficient than others, it would be preferred, if the arrangement of the drive train segments could be improved.

It is therefore an object of the invention to suggest a solution to this technical problem.

This technical problem is solved by way of a land vehicle as defined in claim 1.

This human powered and thus muscular propulsed land vehicle has a drive train incorporating a human powered actuator, for example a pedal drive and a non-human powered actuator, for example an electric motor, in which both actuators are arranged in an in-line arrangement. This is achieved by dividing the drive train into at least two drive train segments kinematically coupled to each other, whereas the output force drives the driven wheel of the vehicle. Typically the rear wheel of the vehicle will be the driven wheel. Dividing the drive train into several drive train segments arranged in-line with each other involves that at the interface of two drive train segments the driving power is transferred from one drive train segment to the next drive train segment. This feature may be used to arrange drive train segments oblique to each other, for example enclosing an obtuse angle, and thus adapt and shape the drive train to the space available in the vehicle. This concept also allows the integration of the human powered drive and the non-human powered drive in an in-line arrangement arranging non-human powered actuator, for example the electric motor with its rotating member being the interface between a first drive train segment, which is driven by human power, and a second drive train segment linking the driving force of the rotating member of the non-human powered actuator with the driven wheel. Such first drive train segment drives the rotating member of the electric motor as non-human powered actuator, if actuated. Such in-line arrangement allows that both driving forces - the human powered driving force and the non-human powered driving force - may be used independently from each other as well as together to propulse the vehicle. In particular, it is possible to propulse the vehicle with the human powered drive and only use the non-human powered actuator as an auxiliary drive, but not as the primary drive. With such concept the non-human powered actuator only uses little energy. The vehicle thus does not need a large battery capacity, enabling a very light weight design.

The electric motor preferably used in such vehicle as a non-human powered actuator is of the kind, that it may be turned without that any counteracting force needs to be overcome. This, for example, is possible with the use of a brushless DC-motor.

Therefore, virtually all muscular power applied to the pedal drive is used for propulsion of the vehicle.

Dividing the drive train into several drive train segments also allows to make use of different driving means in each drive train segment. Therefore, in each drive train segment the most beneficial driving means for this drive train segment may be applied. It is possible for example to combine for example a chain or belt driven drive train segment with another drive train segment incorporating for example a cardan-shaft drive. Should weight saving and costs be a main prerequisites designing such drive train, a belt or chain drive would seem to be the one to make use of.

The segmentation of the drive train into at least two drive train segments and the interface between the driving means of two drive train segments kinematically coupled in-line to each other allows arranging auxiliary devices like pedal motion and power sensing devices at such interface. Typically such interface would be an axle driven by the driving means of a first drive train segment, which in turn drives the driving means of the second drive train segment. Should the driving means be worked as a traction drive like a chain or belt drive, it is preferable to arrange a torque sensor on such drive train segment interface rather than arranging this on the axle of the pedal drive.

According to one embodiment of such human powered land vehicle, the human powered actuator is designed to propulse the vehicle in one direction only, namely into forward motion. For reversing the vehicle the non-human powered actuator typically is used. This allows without any clutch means to combine both driving forces and to have the human powered actuator decoupled from the driven wheel, in case this turns faster than the human powered drive. Typically this may be achieved by using a free wheel within the interface, of the first drive train segment and the second drive train segment, whereas the driving means of the first drive train segment drive the free wheel mounted and coupled to the rotating member of the non-human powered actuator in a torsion proof manner only in the direction for propulsing the vehicle into forward motion. This concept also allows to use the E-motor as a generator during braking phases.

In order to enhance the comfort for a driver within the vehicle, particulary between the driver's seat and the pedal drive for easier entering and exiting the vehicle in a preferred embodiment the first drive train segment driving the non-human powered actuator, for example an electric motor is driven by a third drive train segment incorporating the human powered actuator. The first drive train segment driving the axle of the non-human powered actuator may then be arranged in a beam of the chassis beneath, carrying possibly a base plate at rather low height. The third drive train segment connects the axle of the human powered actuator, which for example for better pedal action and more comfort is arranged on a higher level than the floor of the vehicle with the first drive train. The third drive train segment and the first drive train segment are arranged oblique to each other, which in turn allows for a shorter design of the vehicle.

Another advantage of arranging the muscular powered drive train and the non-human powered actuator in-line with each other is, that only one gear hub may be used. This is preferably arranged within the axle of the driven wheel, for example the rear wheel. This enables the non-human powered actuator, for example the electric motor to be operated in the most efficient way.

Typically such vehicle will be designed as a three-wheel vehicle with two steered front wheels and one driven rear wheel. This one driven rear wheel may also be designed as a twin wheel.

Using one rear wheel as the driven wheel of the vehicle not only reduces weight compared to a four-wheeled vehicle, but also allows with simple measures to have the rear wheel be co-steered. This means, that the rear wheel may be also steered upon a steering action to steer the front wheels. Co-steering of the rear wheel allows easier curve handling when riding the vehicle, in particular to make sharper bends. With such concept a given steering angle of the front wheels combined with a co-steered rear wheel results in a smaller radius of curvature to be driven. This, in turn, may be used to design the vehicle with a smaller width, because the front wheels in order to achieve a certain radius of curvature when driving may be steered with a smaller steering angle, but still give the same radius of curvature as a vehicle (which the front wheels are steered with a larger steering angle and having no co-steered rear wheel. This gives more usable space between the front wheels to be used in the interior of the chassis. Therefore, in a preferred embodiment, the pedal drive is arranged between the two steered front wheels.

The concept of co-steering the rear wheel for improving the manoeuvrability and thus enhance the comfort of driving may be elaborated for example that only the rear wheel itself is co-steered. Further it is possible, that the rear wheel together with the drive train segment driving the rear wheel are designed as one rigid unit, that can pivot around a vertical axis with respect to the adjacent front part of the vehicle.

Further advantages will become apparent with the description of an embodiment of the invention with reference to the figures. The figures show:
- **Fig. 1:**: A schematic side view with parts cut away of a pedal propulsed land vehicle,
- **Fig. 2:**: a perspective view of the chassis of the vehicle of figure 1 from a first point of view,
- **Fig. 3:**: another perspective view of the chassis of the vehicle depicted in figure 1 from another point of view,

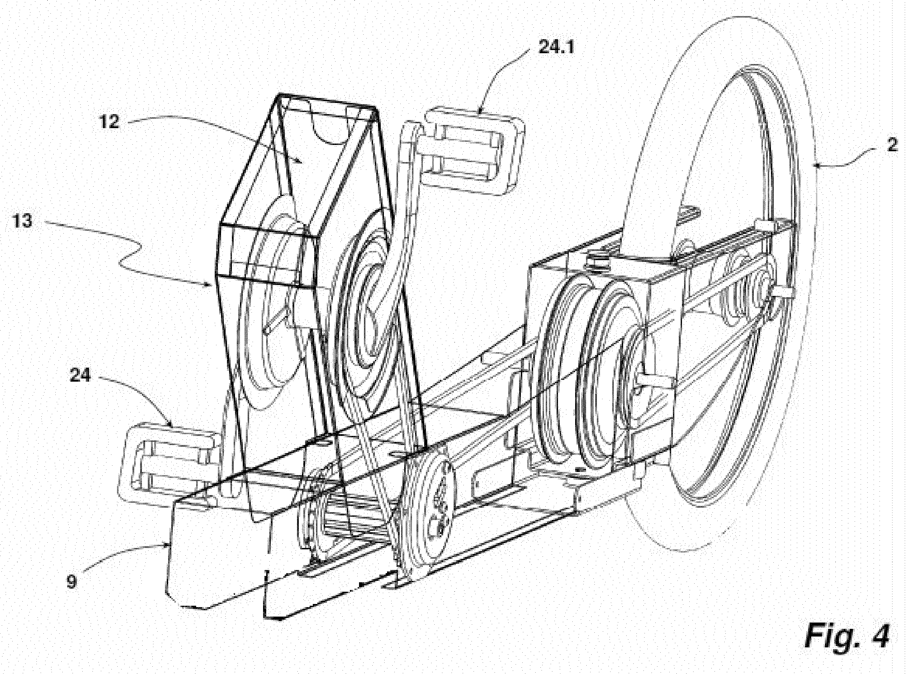

- **Fig. 4:**: a close-up of the power train of the vehicle of figures 1 to 3 with the components housing the drive train being depicted in a transparent mode,

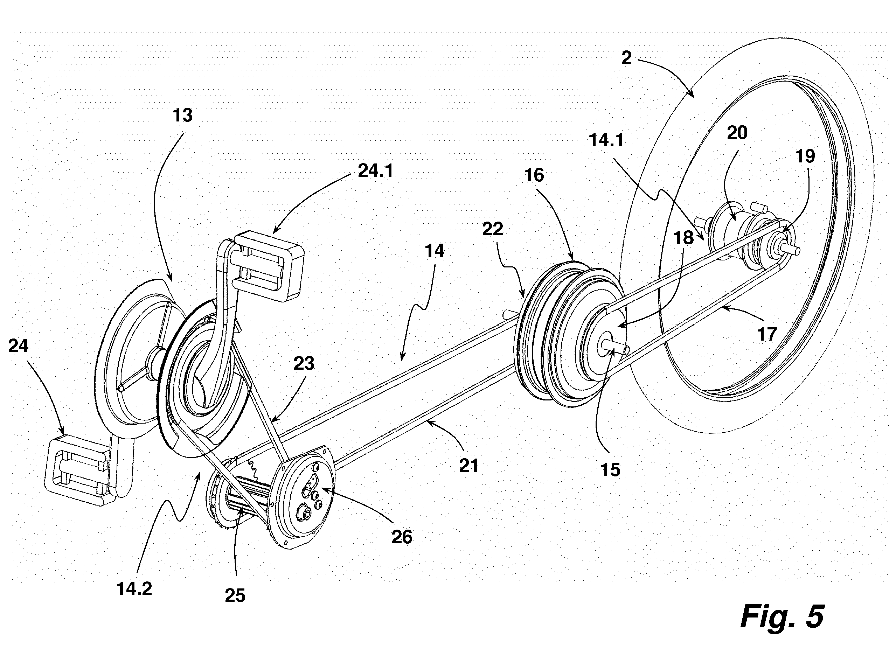

- **Fig. 5:**: the drive train of figure 3 without any components housing it, and

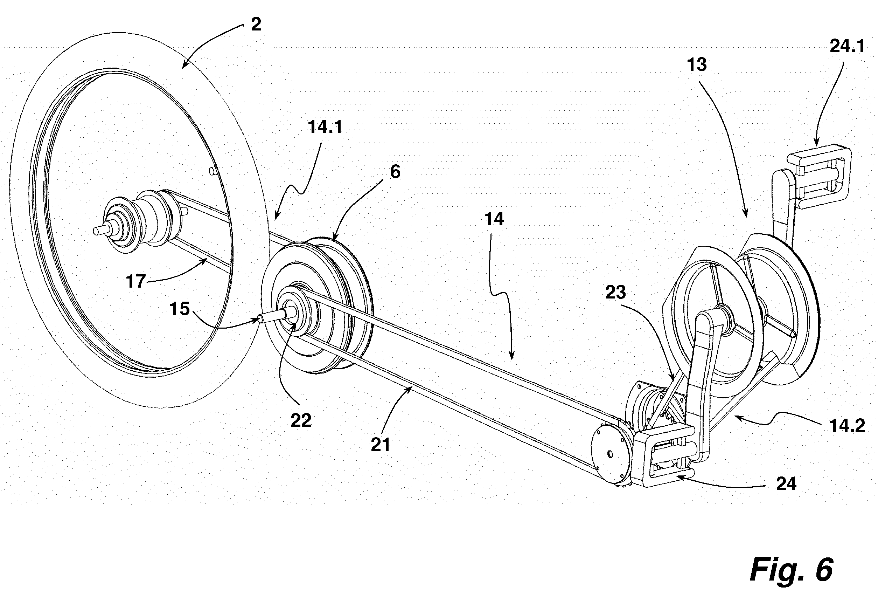

- **Fig. 6:**: the drive train of figure 5 from another point of view.

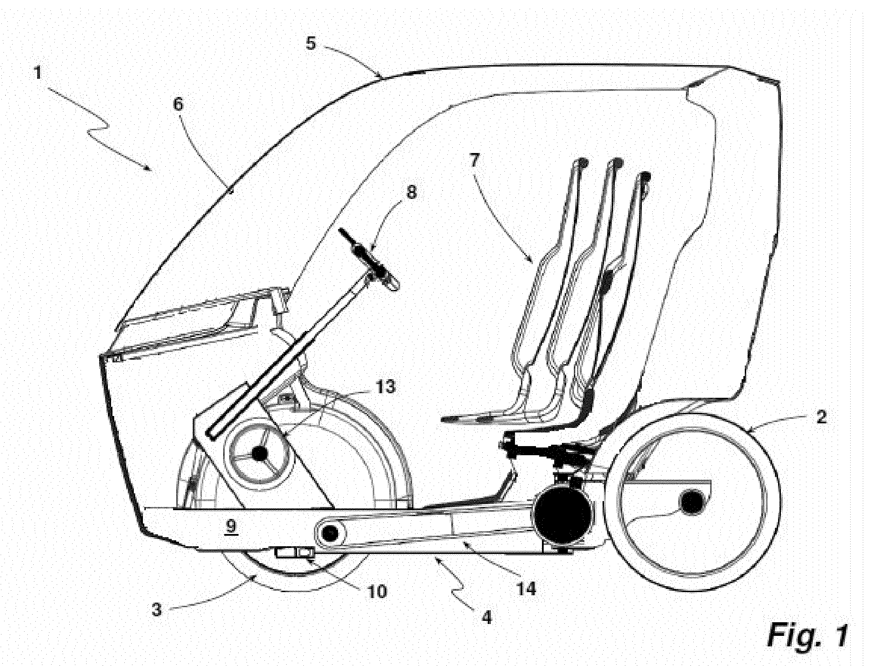

A pedal propulsed land vehicle 1 designed to enhance in particular urban mobility is designed to have three wheels. In the inside side view of figure 1 the rear wheel 2 and the right front wheel 3 are to be seen. The wheels 2, 3 are borne on a chassis 4, which will be described later. The chassis 4 is covered by a top cover 5. The cover 5 is manufactured of plastic material, which may be fiber-reinforced. The cover depicted in figure 1 covers the chassis 4 as to the front, the top and the back. The right side and the left side are kept open. The front of the cover 5 is translucent. This wind shield part of the cover 5 is identified with reference numeral 6. The backside of the cover 5 incorporates a window. The cover 5 may further comprise fenders to protect the driver from splashing water from the front wheel as possible further features.

The chassis 4 supports a seat 7, which is depicted in figure 1 in three of its possible positions. The positions of the seat 7 alter as to their height and the position in respect of the longitudinal extension of the vehicle 1.

The two front wheels 3 of the vehicle 1 are steered. The steering system comprises a steering wheel 8, which is connected in a not depicted manner to a steering gear steering the front wheels 3.

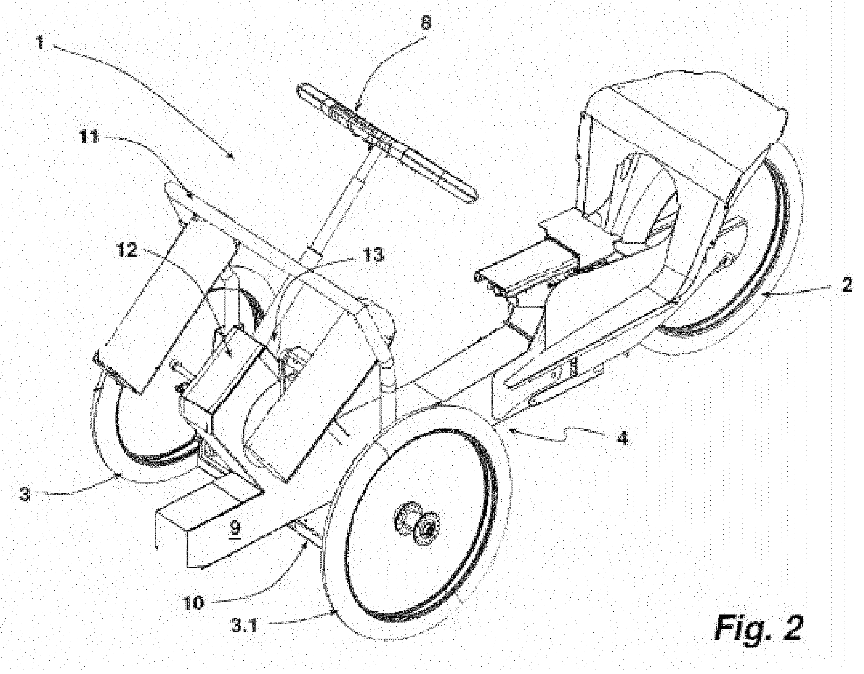

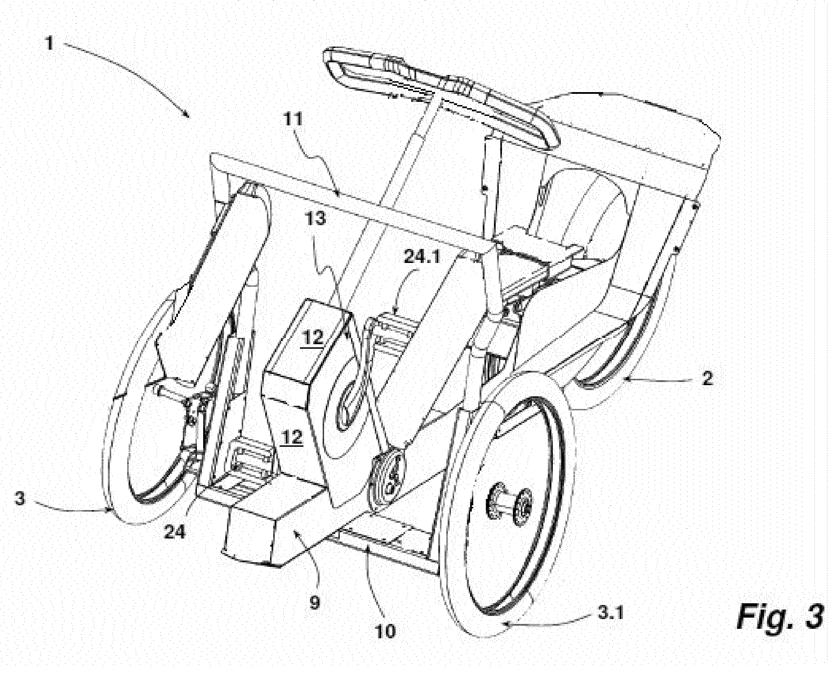

The chassis 4 of the vehicle 1 disposes of a central beam 9 extending in longitudinal direction from the front of the vehicle 1 to the axle of the rear wheel 2. The longitudinal beam 9 is U- or C-shaped in cross-section, with its longitudinal opening facing groundwards. Attached to the beam 9 is a cross-beam 10 extending width-wise to the vehicle. The cross-beam 10 carries the front wheels 3, 3.1 (see figures 2, 3). Mounted on the cross-beam 10 is a mounting bracket 11 linking the bearings of the front wheels 3, 3.1 over the topside of the beam 9.

Mounted on the topside of the beam 9 between the two front wheels 3, 3.1 is a pedal drive housing 12, also bearing a pedal drive 13. The pedal drive 13 is the human powered actuator of the embodiment depicted.

The arrangement of the pedal drive 13 within the housing 12 resting on the topside of beam 9 may better be seen in figure 3. Figure 3 also allows a better view to the cross-beam 10 and the mounting bracket 11. Further, figure 3 shows that the front wheels are mounted to have a negative run-over.

The vehicle 1 has a power train to drive the rear wheel 2, which power train is in the depicted embodiment divided into three drive train segments 14, 14.1, 14.2. A first drive train segment 14 drives the axle 15 of an electric motor 16 as non-human powered actuator. The axle 15 of the electric motor 16 drives the rear wheel 2 via the second drive train segment 14.1. The driving means of the second drive train segment 14.1 is in the depicted embodiment a chain 17 receiving its movement by rotation of a sprocket wheel 18 connected to the housing of the electric motor 16. A second sprocket wheel 19 is arranged on the axle of the rear wheel 2 to receive the driving force. Incorporated into the axle of the rear wheel 2 is a gear hub 20. The driving force received by the sprocket wheel 19 is transferred through the gear hub 20 and then brings the rear wheel 2 into rotational movement. The gear hub 20 may be actuated by the driver. It is also possible to use an automatic gear shifting device.

The electric motor 16 incorporated into the power train is typically an electric motor, which is well known in the art and is used to drive so called e-bikes. With such prior art bikes the electric motor is arranged as the wheel hub of the driven wheel, whereas its axle is fixed to the frame of the bike and the housing of the motor virtually carries the wheel, typically the spokes thereof.

The first drive train segment 14 comprises a chain 21 as driving means driving a sprocket wheel 22 also sitting on the axle 15 of the electric motor 16. The sprocket wheel 22 is a free-wheel. Therefore, driving force may only be transferred from the chain 21 to the axle 15 in one direction of rotation. This is the direction for propulsing the vehicle 1 into a forward movement. The first drive train segment 14 is itself driven by a third drive train segment 14.2, which incorporates the pedal drive 13. The driving means of the third drive train segment 14.2 again is a chain 23. The chain 23 is driven by rotating the two pedals 24, 24.1 of the pedal drive 13 around their axle and thus driving a sprocket wheel, which in turn drives the chain 23. As to be seen in the figures by arrangement of the housing 12 enclosing the third drive train segment 14.2 and the beam 9 enclosing the first drive train segment 14 both drive train segments 14, 14.2 are arranged angular to each other. In the embodiment disclosed both drive train segments 14, 14.2 enclose an obtuse angle. This arrangement allows - which might best be seen in the inside view of the vehicle 1 according to figure 1 - to arrange the first drive train segment 14 within the beam 9 rather low to the ground but still have the axis of the pedal drive 13 sufficient high for good and efficient pedalling as well as for comfort reasons. Therefore, this arrangement allows having an easy access into the vehicle, thus providing for an easy entering and an easy exiting of the vehicle. The step to be taken is rather low. In particular it may be noted, that inside the vehicle nothing is in the way between the seat 7 and the pedal drive 13. As further to be seen from figure 1, the height of the beam 9 is basically arranged below the axis of rotation of the two front wheels 3, 3.1 and the rear wheel 2.

In the interface between the two drive train segments 14.2 and 14, which interface is made by an axle 25 with two sprocket wheels - one to receive the driving force via the chain 23 and one driving the chain 21 bringing the pedal force onto the axle 15 - coupled to axle 25 is a pedal force or torque sensor 26 sensing the strain on the chain 23 driving the axle 25. The sensor 26 senses the applied to chain 23, which in turn is dependent on the muscular force applied to the pedal drive 13. The output of the tension sensor 26 is inputted into a computing device, which in turn actuates the electric motor 16. Depending on the sensed tension of the chain 23 the electric motor 16 is actuated to support propulsion of the vehicle 1. In another embodiment of measuring the pedal power is the use of a torque sensor within the pedal axle.

The electric motor 16 may be actuated in both directions of rotation. In case the vehicle 1 is to be propulsed in reverse motion, then the electric motor 16 will be actuated accordingly. Reversing the vehicle 1 is with the embodiment described not possible using muscular force due to the free wheel 22 on the axle 15 of the electric motor 16. According to another embodiment the free wheel 22, which induces the driving force of the first drive train segment 14 into the second drive train segment 14.1 may be arranged in a manner, that its free wheel state may be blocked. Such blocking of the free wheel state of this wheel may then be utilized to propuls the vehicle with pedal force also backwards. For the locking actuation of this wheel for example electro a magnetic actuating device may be utilized locking the free wheel state of this wheel as long as the actuating device itself is actuated. Such actuating device could be linked with a forward movement sensor, which output signals could be utilized to have this wheel be put back in its free wheel state as soon as a forward motion of the vehicle is detected.

In another embodiment a physical switch in front of the driver is arranged, which enables him to manually choose between the forward and reverse direction of propulsing the vehicle. In yet another embodiment of realizing a switch forward/reverse is the use of a double free wheel that may be arranged in one of the intermediate axles arranged to transfer the power from a first drive train segment to a second drive train segment.

The invention described is particularly aimed at a homologation of a vehicle as defined in "Pedelec 25", i. e.: An electrically supported bicycle, in which the electric motor is engaged only when the driver is pedalling and the electric power is shut off at a speed above 25 km/h. Except from this are parking conditions, where a pure electric driving is allowable for lower speeds, i. e. up to 5 to 6 km/h.

### Reference List

- 1: vehicle
- 2: rear wheel
- 3, 3.1: front wheel
- 4: chassis
- 5: cover
- 6: wind shield
- 7: seat
- 8: steering wheel
- 9: beam
- 10: cross-beam
- 11: mounting bracket
- 12: pedal drive housing
- 13: pedal drive
- 14, 14.1, 14.2: drive train segment
- 15: axle
- 16: electric motor
- 17: chain
- 18: sprocket wheel
- 19: sprocket wheel
- 20: gear hub
- 21: chain
- 22: sprocket wheel
- 23: chain
- 24, 24.1: pedal
- 25: axle
- 26: torque sensor

## Claims

1. Human powered land vehicle with two steered front wheels and one rear wheel (2) driven by a drive train, which drive train (3, 3.1) incorporates a human powered actuator (13) to be actuated for propulsion of the vehicle (1) by a person driving the vehicle (1) and kinematically coupled to a driven wheel for propulsing the vehicle in at least one driving direction and which vehicle (1) further disposes of a non-human powered actuator (16) arranged to drive at least one of the wheels of the vehicle, whereas
- the drive train between the human powered actuator (13) and the driven wheel (2) comprises at least two drive train segments (14, 14.1, 14.2), whereas between two drive train segments (14, 14.1, 14.2) the driving power is transferred from a first driving means (21) of a first drive train segment (14) to a second driving means (17) of a second drive train segment (14.1),
- the non-human powered actuator is incorporated in-line into this drive train, such that the rotating member (18) of the non-human powered actuator (16) is driven by way of a first driving means (21) of a first drive train segment (14) driven by the human powered actuator (13) and that the rotational movement of the rotating member (18) of the non-human powered actuator (16) drives a second drive train segment driving the driven wheel (2), and
- the first drive train segment (14) is driven by a third drive train segment (14.2) incorporating the human powered actuator (13),
**characterized, in that**
- the non-human powered actuator is an electric motor (16),
- a longitudinal beam (9) encloses the first drive train segment (14) and is arranged below the axis of rotation of the two front wheels (3, 3.1) and the rear wheel (2)
- the third drive train segment (14.2) is enclosed in a housing (12) and
- whereas the longitudinal extension of the first and third drive train segments (14, 14.2) are arranged angular to each other embracing an obtuse angle.

2. Vehicle according to claim 1, **characterized, in that** the rotating member (18) of the non-human powered actuator (16) is driven by a traction mechanism like a chain (21), a belt or the like as driving means to drive a wheel (22) on the rotating member (18) of the non-human powered actuator (16).

3. Vehicle according to claim 1 or 2, **characterized, in that** the wheel (22) on the rotating member (18) of the non-human powered actuator (16) rotatable driven by the first drive train segment (14) is mounted to the a free wheel, coupled to the rotating member (18) of the non-human powered actuator (16) in a torsion proof manner only in the direction for propulsing the vehicle (1) into forward motion.

4. Vehicle according to one of the claims 1 to 3, **characterized, in that** the drive means of the second drive train segment (14.1) is a traction mechanism (17) linking the rotating member (18) of the non-human powered actuator (16) with a drive wheel (19) on the axle of the driven wheel (2).

5. Vehicle according to one of claims 1 to 4, **characterized, in that** the drive means of the third drive train segment (14.2) is a chain (23) driving a drive wheel on a transfer axle (23) to transfer the driving motion received by the human powered actuator (13) to the drive means (21) of the first drive train segment (14).

6. Vehicle according to one of claims 1 to 5, **characterized, in that** the means transferring the driving power from the third to the first driving segment are borne in a torque sensing arrangement for sensing the torque induced into the driving means (23) of the third drive train segment (14.2) by the human powered actuator (13).

7. Vehicle according to one of claims 1 to 6, **characterized, in that** the human power actuator is a pedal drive (13).

8. Vehicle according to claim 7, **characterized, in that** pedal drive is feet driven.

9. Vehicle according to one of claims 1 to 8, **characterized, in that** implemented into the drive train one or multiple torque shifters are incorporated.

10. Vehicle according to one of claims 1 to 9, **characterized, in that** the driven wheel is the rear wheel (2) of the vehicle (1).

11. Vehicle according to claim 10, **characterized, in that** the rear wheel (2) incorporates a gear hub (20) within its axle, kinematically coupling the driving power received via the second drive train segment (14.1) to the rear wheel (2).

12. Vehicle according to one of claims 1 to 11, **characterized, in that** the pedal drive (13) is arranged in front of a driver's seat (7).

13. Vehicle according to one of claims 1 to 12, **characterized, in that** the rear wheel is a twin wheel.

14. Vehicle according to one of claims 1 to 13, **characterized, in that** the rear wheel or the rear wheel together with a rear wheel support and the drive train driving the rear wheel is linked to the steering system of the front wheels allowing the rear wheel to the steered by a steering action in the opposite direction to the front wheels.

15. Vehicle according to claim 14, **characterized, in that** the amount of the steerability of the rear wheel is limited to a few degrees in each direction departing from the neutral position.

## Patentansprüche

1. Muskelkraftbetriebenes Landfahrzeug mit zwei gelenkten Vorderrädern und einem Hinterrad (2), das von einem Antriebsstrang angetrieben wird, wobei der Antriebsstrang (3, 3.1) ein muskelkraftbetriebenes Betätigungselement (13) aufweist, das zum Vortrieb des Fahrzeugs (1) durch eine das Fahrzeug (1) fahrende Person zu betätigen ist und kinematisch mit einem angetriebenen Rad gekoppelt ist, um das Fahrzeug in mindestens eine Fahrrichtung voranzutreiben, und wobei das Fahrzeug (1) ferner über ein nicht-muskelkraftbetriebenes Betätigungselement(16) verfügt, das angeordnet ist, um mindestens eines der Räder des Fahrzeugs anzutreiben, wobei
der Antriebsstrang zwischen dem muskelkraftbetriebenen Betätigungselement (13) und dem angetriebenen Rad (2) mindestens zwei Antriebsstrangsegmente (14,14.1,14.2) umfasst, wobei die Antriebsleistung zwischen zwei Antriebsstrangsegmenten (14, 14.1, 14.2) von einem ersten Antriebsmittel (21) eines ersten Antriebsstrangsegments (14) auf ein zweites Antriebsmittel (17) eines zweiten Antriebsstrangsegments (14.1) übertragen wird,
das nicht-muskelkraftbetriebene Betätigungselement direkt in diesen Antriebsstrang eingegliedert ist, so dass das sich drehende Element (18) des nichtmuskelkraftbetriebenen Betätigungselements (16) mittels eines vom muskelkraftbetriebenen Betätigungselement (13) betriebenen ersten Antriebsmittels (21) eines ersten Antriebsstrangsegments (14) angetrieben wird und dass die Drehbewegung des sich drehenden E!ements(18) des nicht-muskelkraftbetriebenen Betätigungselements (16) ein zweites Antriebsstrangsegment antreibt, welches das angetriebene Rad (2) antreibt, und
das erste Antriebsstrangsegment (14) durch ein drittes Antriebsstrangsegment (14.2) angetrieben wird, in welches das muskelkraftbetriebene Betätigungselement (13) eingegliedert ist,
**dadurch gekennzeichnet, dass**
das nicht-muskelkraftbetriebene Betätigungselement ein Elektromotor (16) ist,
ein Längsträger (9) das erste Antriebsstrangsegment (14) umschließt und unterhalb der Drehachse der beiden Vorderräder (3, 3.1) und des Hinterrades (2) angeordnet ist,
das dritte Antriebsstrangsegment (14.2) in einem Gehäuse (12) umschlossen ist und
wobei die Längserstreckung des ersten und des dritten Antriebsstrangsegments (14, 14.2) winklig zueinander, einen stumpfen Winkel einschließend, angeordnet sind.

2. Fahrzeug nach Anspruch 1, **dadurch gekennzeichnet, dass** das sich drehende Element (18) des nicht-muskelkraftbetriebenen Betätigungselements (16) durch einen Kraftschlussmechanismus wie beispielsweise eine Kette (21), einen Riemen oder dergleichen, als Antriebsmittel zum Antreiben eines Rads (22) am sich drehenden Element (18) des nicht-muskelkraftbetriebenen Betätigungselements (16) angetrieben wird.

3. Fahrzeug nach Anspruch 1 oder 2, **dadurch gekennzeichnet, dass** das Rad (22) an dem sich drehenden Etement(18) des nicht-muskelkraftbetriebenen Betätigungselements (16), das durch das erste Antriebsstrangsegment (14) drehend angetrieben wird, an einem freien Rad montiert ist, das mit dem sich drehenden Element (18) des nicht-muskelkraftbetriebenen Betätigungselements (16) torsionsfest nur in der Richtung zum Vorantrieben des Fahrzeugs (1) in einer Vorwärtsbewegung gekoppelt ist.

4. Fahrzeug nach einem der Ansprüche 1 bis 3, **dadurch gekennzeichnet, dass** das Antriebsmittel des zweiten Antriebsstrangsegments (14.1) ein Kraftschlussmechanismus (17) ist, der das sich drehende Element (18) des nichtmuskelkraftbetriebenen Betätigungselements (16) mit einem Antriebsrad (19) auf der Achse des angetriebenen Rads (2) verbindet.

5. Fahrzeug nach einem der Ansprüche 1 bis 4, **dadurch gekennzeichnet, dass** das Antriebsmittel des dritten Antriebsstrangsegments (14.2) eine Kette (23) ist, die ein Antriebsrad auf einer Übertragungsachse (23) antreibt, um die vom muskelkraftbetriebenen Betätigungselement (13) empfangene Antriebsbewegung auf das Antriebsmittel (21) des ersten Antriebsstrangsegments (14) zu übertragen.

6. Fahrzeug nach einem der Ansprüche 1 bis 5, **dadurch gekennzeichnet, dass** die Mittel, welche die Antriebsleistung vom dritten auf das erste Antriebssegment übertragen, in einer das Drehmoment erfassenden Anordnung zum Erfassen des Drehmoments gelagert sind, das vom muskelkraftbetriebenen Betätigungselement (13) in das Antriebsmittel (23) des dritten Antriebsstrangsegments (14.2) eingebracht wird.

7. Fahrzeug nach einem der Ansprüche 1 bis 6, **dadurch gekennzeichnet, dass** das muskelkraftbetriebene Betätigungselement ein Pedalantrieb (13) ist.

8. Fahrzeug nach Anspruch 7, **dadurch gekennzeichnet, dass** der Pedalantrieb fußbetrieben ist.

9. Fahrzeug nach einem der Ansprüche 1 bis 8, **dadurch gekennzeichnet, dass** im Antriebsstrang umgesetzt ein oder mehrere Drehmomentschalter eingegliedert sind.

10. Fahrzeug nach einem der Ansprüche 1 bis 9, **dadurch gekennzeichnet, dass** das angetriebene Rad das Hinterrad (2) des Fahrzeugs (1) ist.

11. Fahrzeug nach Anspruch 10, **dadurch gekennzeichnet, dass** in die Achse des Hinterrades (2) eine Nabenschaltung (20) eingegliedert ist, welche die über das zweite Antriebsstrangsegment (14.1) empfangene Antriebsleistung kinematisch mit dem Hinterrad (2) koppelt.

12. Fahrzeug nach einem der Ansprüche 1 bis 11, **dadurch gekennzeichnet, dass** der Pedalantrieb (13) vor einem Fahrersitz (7) angeordnet ist.

13. Fahrzeug nach einem der Ansprüche 1 bis 12, **dadurch gekennzeichnet, dass** das Hinterrad ein Zwillingsrad ist.

14. Fahrzeug nach einem der Ansprüche 1 bis 13, **dadurch gekennzeichnet, dass** das Hinterrad oder das Hinterrad zusammen mit einem Hinterradhalter und der das Hinterrad antreibende Antriebsstrang mit dem Lenksystem der Vorderräder verbunden ist, was es ermöglicht, das Hinterrad durch einen Lenkvorgang in die zu den Vorderrädern entgegengesetzte Richtung zu steuern.

15. Fahrzeug nach Anspruch 14, **dadurch gekennzeichnet, dass** der Umfang der Lenkbarkeit des Hinterrades auf einige wenige Grad in jede Richtung ausgehend von der neutralen Position begrenzt ist.

## Revendications

1. Véhicule terrestre à propulsion humaine avec deux roues avant directrices et une roue arrière (2) entraînée par un train d'entraînement, lequel train d'entraînement (3, 3.1) comprend un actionneur à propulsion humaine (13) à actionner pour la propulsion du véhicule (1) par une personne conduisant le véhicule (1) et couplé par voie cinématique à une roue entraînée pour propulser le véhicule dans au moins une direction d'entraînement et lequel véhicule (1) dispose en outre d'un actionneur à propulsion non humaine (16) agencé pour entraîner au moins l'une des roues du véhicule, alors que :
le train d'entraînement entre l'actionneur à propulsion humaine (13) et la roue entraînée (2) comprend au moins deux segments de train d'entraînement (14, 14.1, 14.2), alors qu'entre deux segments de train d'entraînement (14, 14.1, 14.2), la puissance d'entraînement est transférée d'un premier moyen d'entraînement (21) d'un premier segment de train d'entraînement (14) à un second moyen d'entraînement (17) d'un deuxième segment de train d'entraînement (14.1),
l'actionneur à propulsion non humaine est incorporé en ligne dans ce train d'entraînement, de sorte que l'élément rotatif (18) de l'actionneur à propulsion non humaine (16) est entraîné au moyen d'un premier moyen d'entraînement (21) d'un premier segment de train d'entraînement (14) entraîné par l'actionneur à propulsion humaine (13) et en ce que le mouvement de rotation de l'élément rotatif (18) de l'actionneur à propulsion non humaine (16) entraîne un deuxième segment de train d'entraînement entraînant la roue entraînée (2), et
le premier segment de train d'entraînement (14) est entraîné par un troisième segment de train d'entraînement (14.2) incorporant l'actionneur à propulsion humaine (13), **caractérisé en ce que** :
l'actionneur à propulsion non humaine est un moteur électrique (16),
une poutre longitudinale (9) enferme le premier segment de train d'entraînement (14) et est agencée au-dessous de l'axe de rotation des deux roues avant (3, 3.1) et de la roue arrière (2),
le troisième segment de train d'entraînement (14.2) est enfermé dans un boîtier (12), et
alors que les extensions longitudinales des premier et troisième segments de train d'entraînement (14, 14.2) sont agencées de manière angulaire entre elles, enfermant un angle obtus.

2. Véhicule selon la revendication 1, **caractérisé en ce que** l'élément rotatif (18) de l'actionneur à propulsion non humaine-(16) est entraîné par un mécanisme de traction en forme de chaîne (21), de courroie ou similaire en tant que moyen d'entraînement pour entraîner une roue (22) sur l'élément rotatif (18) de l'actionneur à propulsion non humaine (16).

3. Véhicule selon la revendication 1 ou 2, **caractérisé en ce que** la roue (22) sur l'élément rotatif (18) de l'actionneur à propulsion non humaine (16) entraînée en rotation par le premier segment de train d'entraînement (14) est montée sur la roue libre, couplée au mécanisme rotatif (18) de l'actionneur à propulsion non humaine (16) d'une manière résistant à la torsion uniquement dans la direction pour propulser le véhicule (1) en marche avant.

4. Véhicule selon l'une des revendications 1 à 3, **caractérisé en ce que** le moyen d'entraînement du deuxième segment de train d'entraînement (14.1) est un mécanisme de traction (17) reliant l'élément rotatif (18) de l'actionneur à propulsion non humaine (16) avec une roue d'entraînement (19) sur un essieu de la roue entraînée (2).

5. Véhicule selon l'une des revendications 1 à 4, **caractérisé en ce que** le moyen d'entraînement du troisième segment de train d'entraînement (14.2) est une chaîne (23) entraînant une roue d'entraînement sur un essieu de transfert (23) pour transférer le mouvement d'entraînement reçu par l'actionneur à propulsion humaine (13), au moyen d'entraînement (21) du premier segment de train d'entraînement (14).

6. Véhicule selon l'une des revendications 1 à 5, **caractérisé en ce que** le moyen transférant la puissance d'entraînement du troisième au premier segment d'entraînement est supporté dans un agencement de détection de couple pour détecter le couple induit dans le moyen d'entraînement (23) du troisième segment de train d'entraînement (14.2) par l'actionneur à propulsion humaine (13).

7. Véhicule selon l'une des revendications 1 à 6, **caractérisé en ce que** l'actionneur à propulsion humaine est un entraînement par pédale (13).

8. Véhicule selon la revendication 7, **caractérisé en ce que** l'entraînement par pédale est entraîné par les pieds.

9. Véhicule selon l'une des revendications 1 à 8, **caractérisé en ce que** mis en oeuvre dans le train d'entraînement, on incorpore un ou plusieurs dispositifs de changement de couple.

10. Véhicule selon l'une des revendications 1 à 9, **caractérisé, en ce que** la roue entraînée est la roue arrière (2) du véhicule (1).

11. Véhicule selon la revendication 10, **caractérisé en ce que** la roue arrière (2) comprend un moyeu d'engrenage (20) à l'intérieur de son essieu, couplant, par voie cinématique, la puissance d'entraînement reçue via le deuxième segment de train d'entraînement (14.1) à la roue arrière (2).

12. Véhicule selon l'une des revendications 1 à 11, **caractérisé en ce que** l'entraînement par pédale (13) est agencé en face du siège (7) du conducteur.

13. Véhicule selon l'une des revendications 1 à 12, **caractérisé en ce que** la roue arrière est une roue jumelée.

14. Véhicule selon l'une des revendications 1 à 13, **caractérisé en ce que** la roue arrière ou la roue arrière conjointement avec un support de roue arrière et le train d'entraînement entraînant la roue arrière, est reliée au système de direction des roues avant, permettant à la roue arrière d'être dirigée par une action de direction dans la direction opposée aux roues avant.

15. Véhicule selon la revendication 14, **caractérisé en ce que** la quantité de capacité de direction de la roue arrière est limitée à quelques degrés dans chaque direction à partir de la position neutre.
